# EUROPEAN PATENT SPECIFICATION

(11) **EP 3 617 027 B1**
(45) Date of publication and mention of the grant of the patent: **22.02.2023**
(21) Application number: 17936023.5
(22) Date of filing: 28.12.2017
(51) Int. Cl.: B61D 27/00, B60H 1/00, B60H 1/32

(54) **RAILWAY TRAIN AND UNITARY AIR-CONDITIONING UNIT THEREOF**
EISENBAHNZUG UND EINHEITLICHE KLIMAANLAGE DAFÜR
TRAIN DE CHEMIN DE FER ET UNITÉ DE CLIMATISATION MONOBLOC ASSOCIÉE

(30) Priority: 26.12.2017 CN 201711436660; 26.12.2017 CN 201721856757 U
(43) Date of publication of application: 04.03.2020
(73) Proprietor: CRRC Changchun Railway Vehicles Co., Ltd., Changchun, Jilin 130000 (CN)
(72) Inventor: CAO, Yanhua, Changchun, Jilin 130000 (CN); ZHAO, Jinlong, Changchun, Jilin 130000 (CN); CAO, Xianwei, Changchun, Jilin 130000 (CN); LI, Changsheng, Changchun, Jilin 130000 (CN)
(74) Representative: Sharman, Thomas Alexander
(86) International application number: PCT/CN2017/119338
(87) International publication number: WO 2019/127206

(56) References cited:
- CN-A- 101 749 879
- CN-A- 103 625 491
- CN-U- 203 372 244
- CN-U- 206 049 685
- CN-U- 207 631 253
- JP-A- 2015 051 680
- JP-A- 2017 036 046

## Description

The application claims the priorities to Chinese patent application No. titled "RAILWAY TRAIN AND UNITARY AIR-CONDITIONING UNIT THEREOF" and Chinese patent application No. titled "RAILWAY TRAIN AND UNITARY AIR-CONDITIONING UNIT THEREOF", filed with the China National Intellectual Property Administration on December 26, 2017.

### FIELD

This application relates to a unitary air conditioning unit for a railway train. Moreover, the present application further relates to a railway train having the unitary air conditioning unit.

### BACKGROUND

In order to improve the riding comfort, all multiple-unit trains are provided with an air conditioning system. If a railway train runs in a cold environment, a heating system is required to be arranged in the railway train. A conventional railway train is generally heated by the heating system. In order to ensure the comfort of a driver's compartment of the multiple-unit train, the driver's compartment is provided with a separate air conditioning system. An air conditioning unit serves as a core component of the air conditioning system of the driver's compartment, which is required to be comfort, safe and reliable. Components for ventilation, cooling, heating and the like are provided in the air conditioning unit. Air subjected to a certain treatment is sent into a car in a certain manner for controlling the temperature, the humidity, the cleanliness and airflow pressure of air in the car in an appropriate range. An air conditioning unit of a driver's compartment of a conventional multiple-train unit is a separated-type air conditioning unit with an evaporation unit being provided at a roof of the car and a condensation unit being provided under the car, and the evaporation unit and the condensation unit are connected to each other by a pipeline. A fresh air inlet is embodied as a fresh air inlet of an air conditioning unit of a passenger compartment, fresh air is delivered to an air conditioning unit of the driver's compartment. For the separated-type air conditioning unit, a welded pipeline is required for connecting the evaporation unit and the condensation unit. The arrangement of the pipelines inside the car is complicated, it is difficult to install the pipeline, it takes a long time to maintain the pressure of the welded pipeline, the manufacturability is poor, and the welded pipeline is apt to leak. The fresh air is required to be delivered from a fresh air port of the passenger compartment through a blower and a fresh air duct to the air conditioning unit of the driver's compartment, which occupies the space of an air duct of the passenger compartment.

CN103625491A discloses an overhead air conditioning unit with the active pressure-protection function. The overhead air conditioning unit with the active pressure-protection function is installed on the top of a train and comprises a shell, wherein the interior of the shell is divided into an indoor cavity, an outdoor cavity and a ventilation cavity through two first partition boards, the ventilation cavity is divided into a fresh air cavity and an exhaust discharging cavity through a second partition board, the fresh air cavity is provided with a fresh air inlet, a fresh air outlet and a fresh air high-pressure fan, the exhaust discharging cavity is provided with an exhaust discharging inlet, an exhaust discharging outlet, an exhaust discharging high-pressure fan and an exhaust discharging low-pressure fan, the fresh air outlet is communicated with the indoor cavity through an air duct, and the exhaust discharging inlet is communicated with an exhaust discharging air returning port in a compartment through an air duct.

Therefore, a technical issue to be addressed by the person skilled in the art currently is to provide a unitary air conditioning unit, which is integrally-mounted, safe and reliable.

### SUMMARY

A unitary air conditioning unit for a railway train is provided according to the present application. Components of the unitary air conditioning unit are integrally mounted, which saves the operation time of a process and improves the efficiency of labor. Moreover, an air vent and a high-pressure fan are provided, thereby achieving active pressure protection. A railway train including the unitary air conditioning unit is further provided according to the present application.

In order to address the above technical issue, a unitary air conditioning unit for a railway train is provided according to the present application, and the unitary air conditioning unit includes a fixed frame, a compressor, an evaporator and a condenser. The compressor, the evaporator and the condenser are mounted in the fixed frame and communicated with a refrigerant pipeline. A cover plate is mounted on the fixed frame. The cover plate is provided with an air vent B. A high-pressure fan, a heater, an evaporating fan and a condenser fan are further provided in the fixed frame. The high-pressure fan has an air inlet towards the air vent B and an air outlet opening into an evaporation chamber. The evaporating fan has an inlet provided in the evaporation chamber and an outlet communicated with an air duct. The air duct is used for delivering air into a car. The evaporating fan is used for delivering gas in the evaporation chamber to the air duct. The fixed frame is a rectangular frame. Four vertical protective plates are sequentially provided under edges of the rectangular frame to surround the rectangular frame, and the unitary air conditioning unit further includes a bottom plate provided under the protective plates. A vertical middle partition plate is provided in the rectangular frame. The evaporation chamber and a condensation chamber are formed at two sides of the middle partition plate. The evaporation chamber and the condensation chamber are independent of each other and isolated from each other through the middle partition plate in a sealed manner. The cover plate is further provided with an air vent A. The air vent A and the air vent B are located above the condensation chamber. The condenser, the condenser fan, the compressor and the high-pressure fan are provided in the condensation chamber. The evaporating fan, the heater and the evaporator are provided in the evaporation chamber.

Preferably, the air vent A is a grille-shaped air port, and the air vent B is a circular grid-shaped air port.

Preferably, the fixed frame is provided with a mounting hole for bolted connection to the cover plate and a car body of the railway train.

Preferably, a sensor for communicating with the car and a control element for communicative connection to the car are mounted in the fixed frame. The control element is used for controlling an operation mode of the unitary air conditioning unit according to a communication signal of the car.

A railway train is further provided according to the present application, including a car body and a unitary air conditioning unit. The unitary air conditioning unit is mounted to the car body. The unitary air conditioning unit is the unitary air conditioning unit according to any one of the above aspects.

The unitary air conditioning unit for the railway train is provided according to the present application, and the unitary air conditioning unit includes the fixed frame, the compressor, the evaporator and the condenser. The compressor, the evaporator and the condenser are mounted in the fixed frame and communicated with the refrigerant pipeline. The cover plate is mounted on the fixed frame. The cover plate is provided with the air vent B. The high-pressure fan, the heater, the evaporating fan and the condenser fan are further provided in the fixed frame. The high-pressure fan has the air inlet close to the air vent B and the air outlet opening into the evaporation chamber. The evaporating fan has the inlet provided in the evaporation chamber and the outlet communicated with an air duct. The air duct is used for delivering air into the car. The evaporating fan is used for delivering gas in the evaporation chamber to the air duct. Instead of being separately mounted, the components are integrally mounted, thus, the operation time of a process is saved, and the efficiency of labor is improved. Moreover, the process of mounting the refrigerant pipeline outside an air conditioning unit is eliminated, thus, an assembly cycle of the entire train is shortened. In addition, leakage points are reduced, which ensures the reliability of the system. The space is saved by providing the air vent. When an external pressure fluctuates greatly, a large pressure change outside the car body may be counteracted by the high-pressure fan, thereby achieving active pressure protection.

The railway train including the above unitary air conditioning unit is further provided according to the present application. Since the unitary air conditioning unit has the technical effects described above, the above railway train should also have the same technical effects, which will not be described in detail herein.

### BRIEF DESCRIPTION OF THE DRAWINGS

Figure 1 is a schematic view showing the internal structure of an embodiment of a unitary air conditioning unit according to the present application; and
Figure 2 is a schematic view showing the external structure of the embodiment of the unitary air conditioning unit according to the present application.

Reference Numerals in the figures:

| | |
|---|---|
| 1. fixed frame, | 2. compressor, |
| 3-1. evaporator, | 3-2. condenser, |
| 4. cover plate, | 5-1. air vent A, |
| 5-2. air vent B, | 6-1. high-pressure fan, |
| 6-2. evaporator fan, | 6-3. condenser fan, |
| 7. protective plate, | 8. middle partition plate, |
| 9. heater. | |

### DETAILED DESCRIPTION OF EMBODIMENTS

A unitary air conditioning unit for a railway train is provided according to the present application. Components of the unitary air conditioning unit are integrally mounted, which saves the operation time of a process and improves the efficiency of labor. Moreover, an air vent and a high-pressure fan are provided, thereby achieving active pressure protection. A railway train including the unitary air conditioning unit is further provided according to the present application.

In order to make the person skilled in the art have a better understanding of a solution of the present application, the present application is described hereinafter in further detail in conjunction with the drawings and embodiments.

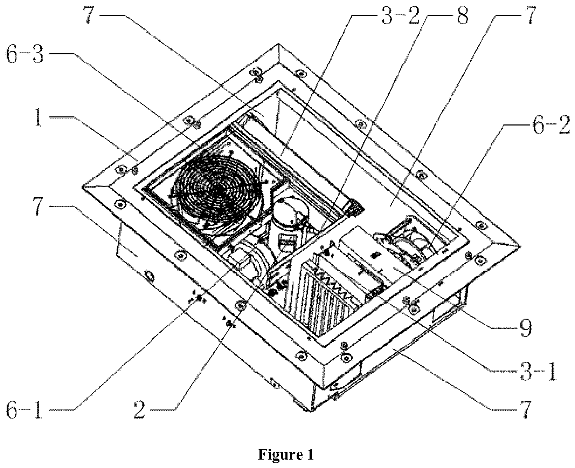

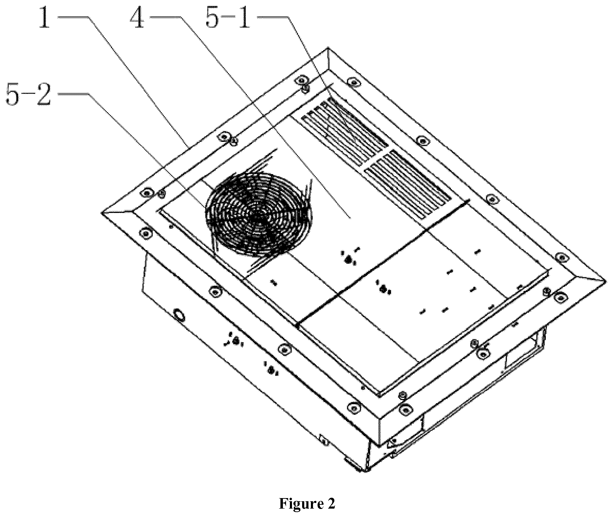

Reference is made to Figure 1 and Figure 2. Figure 1 is a schematic view showing the internal structure of an embodiment of the unitary air conditioning unit according to the present application, and Figure 2 is a schematic view showing the external structure of the embodiment of the unitary air conditioning unit according to the present application.

A unitary air conditioning unit of a railway train according to the embodiment of the present application includes a fixed frame 1, a compressor 2, an evaporator 3-1, a heater 9, and a condenser 3-2. The compressor 2, the evaporator 3-1, the heater 9, and the condenser 3-2 are mounted in the fixed frame 1 and communicated through a refrigerant pipeline. A cover plate 4 is mounted on the fixed frame 1. The cover plate 4 is provided with an air vent B5-2. A high-pressure fan 6-1, an evaporating fan 6-2 and a condenser fan 6-3 are further provided in the fixed frame 1. The high-pressure fan 6-1 has an air inlet close to the air vent B5-2 and an air outlet opening into an evaporation chamber. The evaporating fan 6-2 has an inlet provided in the evaporation chamber and an outlet communicated with an air duct used for delivering air into a car. The evaporating fan 6-2 may deliver gas in the evaporation chamber to the air duct. The cover plate 4 is further provided with an air vent A5-1. The air vent A5-1 may be a grille-shaped air port and the air vent B5-2 is a circular grid-shaped air port, which provides good ventilation effect and may also prevent foreign matters from entering. Other types of air ports, such as an isolation net, may alternatively be adopted. An outer periphery of the fixed frame 1 may be provided with a mounting hole for bolted connection to a car body of the railway train, and an inner periphery of the fixed frame 1 is provided with a mounting hole for bolted connection to the cover plate 4, which facilitates installation and detachment. Other connection methods such as engaging or welding may alternatively be adopted.

Instead of being separately mounted, the components are integrally mounted, thus, the operation time of the process is saved, and the efficiency of labor is improved. Moreover, a mounting process of the refrigerant pipeline outside the unitary air conditioning unit is eliminated, thus, an assembly cycle of the entire train is shortened. In addition, leakage points are reduced, which ensures the reliability of the system. The space is saved by providing the air vent B5-2. When an external pressure fluctuates greatly, a large pressure change outside the car body is counteracted by the high-pressure fan 6-1, thereby achieving the active pressure protection. The above unitary air conditioning unit is mainly applied in a small region such as a driver's compartment, and may also be applied in a small passenger compartment. Since it is easy to control the amount of the fresh air from the unitary air conditioning unit used in the small region, an active pressure protection system of the high-pressure fan 6-1 may be employed. The high-pressure fan 6-1 is continuously opened. As long as an air conditioning system is in operation, the high-pressure fan 6-1 does not stop operating.

The fixed frame 1 may be in various shapes, and in order to adapt to a mounting position, the fixed frame 1 may be a rectangular frame. Furthermore, in order to ensure the strength, four vertical protective plates 7 may be sequentially provided under four edges of the rectangular frame, and a bottom plate may be provided at a bottom of the rectangular frame to form a housing which has an opening located at an upper end thereof. The components are mounted in the housing, and the upper end of the housing is covered by the cover plate 4.

In the unitary air conditioning unit according to the embodiment of the present application, a vertical middle partition plate 8 is provided in the rectangular frame, the evaporation chamber and a condensation chamber are formed at two sides of the middle partition plate 8, the evaporation chamber and the condensation chamber are independent of each other and isolated from each other through the middle partition plate 8 in a sealed manner. The cover plate 4 is further provided with the air vent A5-1. The air vent A5-1 and the air vent B5-2 are located above the condensation chamber. The condenser 3-2, the condenser fan 6-3, the compressor 2 and the high-pressure fan 6-1 are provided in the condensation chamber. The evaporating fan 6-2, the heater 9 and the evaporator 3-1 are provided in the evaporation chamber. The two air vents are an inlet and an outlet respectively. Generally, the fresh air goes in via the air vent B and goes out via the air vent A, and it is possible that the fresh air goes in via the air vent A and goes out via the air vent B. Each of the cases is within the protection scope of the present application.

Based on the unitary air conditioning unit according to the above embodiment, a sensor for communicating with a car and a control element for communicative connection to the car are mounted in the fixed frame 1. The control element may control an operation mode of the unitary air conditioning unit according to a communication signal of the car. The large pressure change outside the car body may be continuously counteracted by the high-pressure fan 6-1, thereby ensuring the pressure in the passenger compartment to be stable, thus, a requirement of comfort of the car is met.

In addition to the unitary air conditioning unit described above, a railway train including the unitary air conditioning unit described above is further provided according to the embodiment of the present application. For the structures of other components of the railway train, reference may be made to the conventional technology, which will not be described herein.

The railway train and the unitary air conditioning unit therefor according to the present application are described in detail hereinbefore. The principle and the embodiments of the present application are illustrated herein by specific examples. The above description of examples is only intended to help the understanding of the concept of the present application. It should be noted that, for the person skilled in the art, a few of improvements and modifications may be made to the present application without departing from the scope of the present application as defined by the claims annexed to it.

## Claims

1. A unitary air conditioning unit for a railway train, comprising:
a fixed frame (1),
a compressor (2), an evaporator (3-1), and a condenser (3-2) mounted in the fixed frame (1) and communicated with a refrigerant pipeline,
wherein a cover plate (4) is mounted on the fixed frame (1), the cover plate (4) is provided with an air vent B (5-2), and, a high-pressure fan (6-1), a heater (9), an evaporating fan (6-2) and a condenser fan (6-3) are further provided in the fixed frame (1), the high-pressure fan (6-1) has an air inlet towards the air vent B (5-2) and an air outlet opening into an evaporation chamber, the evaporating fan (6-2) has an inlet provided in the evaporation chamber and an outlet communicated with an air duct, the air duct is provided for delivering air into a car, and the evaporating fan (6-2) is provided for delivering air in the evaporation chamber to the air duct,
wherein the fixed frame (1) is a rectangular frame, and four vertical protective plates (7) are sequentially provided under edges of the rectangular frame to surround the rectangular frame, and the unitary air conditioning unit further comprises a bottom plate provided under the protective plates (7),
wherein a vertical middle partition plate (8) is provided in the rectangular frame, the evaporation chamber and a condensation chamber are formed at two sides of the middle partition plate (8), the evaporation chamber and the condensation chamber are independent of each other and isolated from each other through the middle partition plate (8) in a sealed manner, the cover plate (4) is further provided with an air vent A (5-1), the air vent A (5-1) and the air vent B (5-2) are located above the condensation chamber, and the condenser (3-2), the condenser fan (6-3), the compressor (2) and the high-pressure fan (6-1) are provided in the condensation chamber, and the evaporating fan (6-2), the heater (9) and the evaporator (3-1) are provided in the evaporation chamber.

2. The unitary air conditioning unit according to claim 1, wherein the air vent A (5-1) is a grille-shaped air port, and the air vent B (5-2) is a circular grid-shaped air port.

3. The unitary air conditioning unit according to claim 1, wherein the fixed frame (1) is provided with a mounting hole for bolted connection to the cover plate (4) and a car body of a railway train.

4. The unitary air conditioning unit according to any one of claims 1 to 3, wherein a sensor for communicating with a car and a control element for communicative connection to the car are mounted in the fixed frame (1), and the control element is provided for controlling an operation mode of the unitary air conditioning unit according to a communication signal of the car.

5. A railway train, comprising:
a car body; and
a unitary air conditioning unit mounted to the car body,
wherein the unitary air conditioning unit is the unitary air conditioning unit according to any one of claims 1 to 4.

## Patentansprüche

1. Einheitliche Klimaanlage für einen Eisenbahnzug, die Folgendes beinhaltet:
einen festen Rahmen (1),
einen Verdichter (2), einen Verdampfer (3-1) und einen Verflüssiger (3-2), die in dem festen Rahmen (1) montiert sind und mit einer Kältemittelrohrleitung in Kommunikation stehen,
wobei an dem festen Rahmen (1) eine Abdeckplatte (4) montiert ist, die Abdeckplatte (4) mit einer Lüftungsöffnung B (5-2) versehen ist und ferner ein Hochdrucklüfter (6-1), eine Heizvorrichtung (9), ein Verdampfungslüfter (6-2) und ein Verflüssigerlüfter (6-3) in dem festen Rahmen (1) bereitgestellt sind, der Hochdrucklüfter (6-1) einen Lufteinlass zur Lüftungsöffnung B (5-2) hin und eine Luftauslassöffnung in eine Verdampfungskammer aufweist, der Verdampfungslüfter (6-2) einen in der Verdampfungskammer bereitgestellten Einlass und einen mit einem Luftkanal in Kommunikation stehenden Auslass aufweist, der Luftkanal zum Zuführen von Luft in einen Wagen bereitgestellt ist und der Verdampfungslüfter (6-2) zum Zuführen von Luft in der Verdampfungskammer zu dem Luftkanal bereitgestellt ist,
wobei der feste Rahmen (1) ein rechteckiger Rahmen ist und unter Rändern des rechteckigen Rahmens vier vertikale Schutzplatten (7) aufeinanderfolgend bereitgestellt sind, so dass sie den rechteckigen Rahmen umgeben, und die einheitliche Klimaanlage ferner eine unter den Schutzplatten (7) bereitgestellte untere Platte beinhaltet,
wobei in dem rechteckigen Rahmen eine vertikale mittlere Trennplatte (8) bereitgestellt ist, die Verdampfungskammer und eine Verflüssigungskammer an zwei Seiten der mittleren Trennplatte (8) gebildet sind, die Verdampfungskammer und die Verflüssigungskammer voneinander unabhängig und auf abgedichtete Weise durch die mittlere Trennplatte (8) voneinander isoliert sind, die Abdeckplatte (4) ferner mit einer Lüftungsöffnung A (5-1) versehen ist, die Lüftungsöffnung A (5-1) und die Lüftungsöffnung B (5-2) über der Verflüssigungskammer liegen und der Verflüssiger (3-2), der Verflüssigerlüfter (6-3), der Verdichter (2) und der Hochdrucklüfter (6-1) in der Verflüssigungskammer bereitgestellt sind und der Verdampfungslüfter (6-2), die Heizvorrichtung (9) und der Verdampfer (3-1) in der Verdampfungskammer bereitgestellt sind.

2. Einheitliche Klimaanlage nach Anspruch 1, wobei die Lüftungsöffnung A (5-1) eine Luftöffnung in Form eines Lüftungsgitters ist, und die Lüftungsöffnung B (5-2) eine Luftöffnung in Form eines runden Gitters ist.

3. Einheitliche Klimaanlage nach Anspruch 1, wobei der feste Rahmen (1) mit einem Montageloch zur Schraubverbindung mit einer Abdeckplatte (4) und einem Wagenaufbau eines Eisenbahnzugs versehen ist.

4. Einheitliche Klimaanlage nach einem der Ansprüche 1 bis 3, wobei in dem festen Rahmen (1) ein Sensor zur Kommunikation mit einem Wagen und ein Steuerelement zur kommunikationsfähigen Verbindung mit dem Wagen montiert sind und das Steuerelement zum Steuern einer Betriebsart der einheitlichen Klimaanlage gemäß einem Kommunikationssignal des Wagens bereitgestellt ist.

5. Eisenbahnzug, der Folgendes beinhaltet:
einen Wagenaufbau; und
eine an dem Wagenaufbau montierte einheitliche Klimaanlage,
wobei die einheitliche Klimaanlage die einheitliche Klimaanlage nach einem der Ansprüche 1 bis 4 ist.

## Revendications

1. Unité de climatisation monobloc pour un train de chemin de fer, comprenant :
un châssis fixe (1),
un compresseur (2), un évaporateur (3-1) et un condenseur (3-2) montés dans le châssis fixe (1) et communiquant avec une canalisation de réfrigérant,
dans laquelle une plaque couvercle (4) est montée sur le châssis fixe (1), la plaque couvercle (4) est pourvue d'un évent d'air B (5-2), et, un ventilateur haute pression (6-1), un radiateur (9), un ventilo-évaporateur (6-2) et un ventilo-condenseur (6-3) sont pourvus en outre sur le châssis fixe (1), le ventilateur haute pression (6-1) a une admission d'air vers l'évent d'air B (5-2) et une ouverture de sortie d'air dans une chambre d'évaporation, le ventilo-évaporateur (6-2) a une admission fournie dans la chambre d'évaporation et une sortie communiquant avec un conduit d'air, le conduit d'air est fourni pour distribuer de l'air dans une voiture, et le ventilo-évaporateur (6-2) est fourni pour distribuer de l'air dans la chambre d'évaporation au conduit d'air,
dans laquelle le châssis fixe (1) est un châssis rectangulaire, et quatre plaques de protection verticales (7) sont fournies en séquence sous les bords du châssis rectangulaire pour entourer le châssis rectangulaire, et l'unité de climatisation monobloc comprend en outre une plaque de fond fournie sous les plaques de protection (7),
dans laquelle une plaque de division centrale verticale (8) est fournie dans le châssis rectangulaire, la chambre d'évaporation et une chambre de condensation sont formées de deux côtés de la plaque de division centrale (8), la chambre d'évaporation et la chambre de condensation sont indépendantes l'une de l'autre et isolées l'une de l'autre par la plaque de division centrale (8) d'une manière hermétique, la plaque couvercle (4) est pourvue en outre d'un évent d'air A (5-1), l'évent d'air A (5-1) et l'évent d'air B (5-2) sont situés au-dessus de la chambre de condensation, et le condenseur (3-2), le ventilo-condenseur (6-3), le compresseur (2) et le ventilateur haute pression (6-1) sont fournis dans la chambre de condensation, et le ventilo-évaporateur (6-2), le radiateur (9) et l'évaporateur (3-1) sont fournis dans la chambre d'évaporation.

2. Unité de climatisation monobloc selon la revendication 1, dans laquelle l'évent d'air A (5-1) est un orifice d'air en forme de grille, et l'évent d'air B (5-2) est un orifice d'air en forme de grille circulaire.

3. Unité de climatisation monobloc selon la revendication 1, dans laquelle le châssis fixe (1) est pourvu d'un trou de montage pour raccordement boulonné à la plaque couvercle (4) et à une carrosserie de voiture d'un train de chemin de fer.

4. Unité de climatisation monobloc selon l'une quelconque des revendications 1 à 3, dans laquelle un capteur pour communiquer avec une voiture et un élément de contrôle pour connexion communicative avec la voiture sont montés dans le châssis fixe (1), et l'élément de contrôle est fourni pour contrôler un mode de fonctionnement de l'unité de climatisation monobloc conformément à un signal de communication de la voiture.

5. Train de chemin de fer, comprenant :
une carrosserie de voiture ; et
une unité de climatisation monobloc montée sur la carrosserie de voiture,
dans lequel l'unité de climatisation monobloc est l'unité de climatisation monobloc selon l'une quelconque des revendications 1 à 4.
